# EUROPÄISCHE PATENTSCHRIFT

(11) **EP 3 681 837 B1**
(45) Veröffentlichungstag und Bekanntmachung des Hinweises auf die Patenterteilung: **06.10.2021**
(21) Anmeldenummer: 18758647.4
(22) Anmeldetag: 29.08.2018
(51) Int. Cl.: B66B 31/00, B66B 31/02

(54) **KONTINUIERLICH FÖRDERNDE, BEGEHBARE PERSONENTRANSPORTANLAGE MIT LADEMÖGLICHKEIT FÜR MOBILGERÄTE**
CONTINUOUSLY CONVEYING, ACCESSIBLE PERSON TRANSPORT INSTALLATION WITH CHARGING FOR MOBILE DEVICES
INSTALLATION DE TRANSPORT EN CONTINU DE PERSONNES POURVUE DE MOYEN DE CHARGEMENT POUR APPAREIL MOBILE

(30) Priorität: 13.09.2017 EP 17190933
(43) Veröffentlichungstag der Anmeldung: 22.07.2020
(73) Patentinhaber: Inventio AG, 6052 Hergiswil (CH)
(72) Erfinder: KUSSEROW, Martin, 6005 Luzern (CH); ZHU, Zack, 6340 Baar (CH); NOVACEK, Thomas, 2320 Schwechat (AT)
(86) Internationale Anmeldenummer: PCT/EP2018/073223
(87) Internationale Veröffentlichungsnummer: WO 2019/052809

(56) Entgegenhaltungen:
- CN-U- 203 048 372
- JP-A- 2006 027 828
- JP-A- 2010 154 570
- US-A1- 2002 036 121

## Beschreibung

Die vorliegende Erfindung betrifft eine kontinuierlich fördernde, begehbare Personentransportanlage, die als Fahrtreppe oder Fahrsteig ausgebildet ist.

Fahrtreppen und Fahrsteige dienen als Personentransportanlagen dazu, Passagiere auf Tritteinheiten wie Trittstufen oder Paletten stehend innerhalb von Gebäuden oder Bauwerken zu befördern.

Eine Fahrtreppe beziehungsweise ein Fahrsteig weist beidseitig einen im Wesentlichen synchron zu einer Fahrbewegung der Fahrtreppe beziehungsweise des Fahrsteigs bewegten Handlauf auf. Gemäss den Vorschriften müssten sich Passagiere an einem der Handläufe der Fahrtreppe oder des Fahrsteigs festhalten, beispielsweise um im Gleichgewicht zu bleiben und nicht zu stürzen. Viele Passagiere ignorieren jedoch die Handläufe und halten während der Fahrt ihre Hände so weit von einem der Handläufe entfernt, dass sie dann, wenn sie das Gleichgewicht verlieren, keine Chance haben, den Handlauf noch zu ergreifen. Beispielsweise kann ein Passagier aus dem Gleichgewicht geraten, wenn er einen unerwarteten Stoß von einem anderen Passagier bekommt oder die Fahrtreppe oder der Fahrsteig abrupt stoppt. Auch die bei Fahrtreppen vorhandenen Übergänge zwischen den horizontalen Fahrabschnitten der Einstiegs- und Ausstiegsbereiche und dem dazwischenliegenden, schrägen Fahrabschnitt bergen eine gewisse Sturzgefahr, wenn sich die Stufen vertikal zueinander verschieben und der Passagier auf der oberen Stufe seine Fußspitzen nur knapp am Stufenrand platziert hat. Die US 2002/0036121 A1 beschreibt ein Beleuchtungssystem zum Beleuchten eines Handlaufs einer Fahrtreppe. Die Beleuchtung kann den Handlauf hervorheben.

Die JP 2006/027828 A beschreibt eine Personentransportanlage die ein kontaktloses Terminal in den Handlauf integriert hat, geeignet dazu sich mit einem Mobiltelefon zu verbinden.

Es kann unter anderem ein Bedarf an einem Anreiz für Passagiere bestehen, den Handlauf zu greifen oder zumindest eine Hand in der Nähe des Handlaufs zu halten.

Einem solchen Bedarf kann durch eine kontinuierlich fördernde, begehbare Personentransportanlage gemäß dem unabhängigen Anspruch entsprochen werden. Vorteilhafte Ausführungsformen sind in den abhängigen Ansprüchen sowie der nachfolgenden Beschreibung definiert.

Gemäß einem Aspekt der Erfindung wird eine kontinuierlich fördernde, begehbare Personentransportanlage vorgeschlagen, die als Fahrtreppe oder Fahrsteig ausgebildet ist. Die Personentransportanlage weist eine Mobilgerätladevorrichtung auf. Mittels dieser Mobilgerätladevorrichtung kann während eines Personentransports ein Energiespeicher mindestens eines Mobilgerätes geladen werden. Mit der vorliegenden Erfindung kann somit dem Energiespeicher eines Mobilgerätes während eines Personentransports Energie, vorzugsweise elektrische Energie zugeführt werden. Das bedeutet aber nicht, dass nach einer Fahrt auf der mit der vorliegenden Erfindung ausgerüsteten Personentransportanlage der Energiespeicher des Mobilgerätes zwingend vollständig aufgeladen sein muss.

Mögliche Merkmale und Vorteile von Ausführungsformen der Erfindung können unter anderem und ohne die Erfindung einzuschränken als auf nachfolgend beschriebenen Ideen und Erkenntnissen beruhend angesehen werden.

Viele Passagiere von Personentransportanlagen lenken ihre Aufmerksamkeit nahezu ausschließlich auf ihr Mobilgerät wie zum Beispiel ihr Smartphone. Dadurch belegt das Mobilgerät eine Hand, mit der im Falle eines Gleichgewichtsverlusts auf der Personentransportanlage ein Handlauf zum Festhalten greifbar wäre. Zusätzlich ist die Wahrnehmungsfähigkeit des betreffenden Passagiers gegenüber seiner Umgebung wesentlich eingeschränkt.

Bei dem hier vorgestellten Ansatz wird eine Lademöglichkeit zum Aufladen des Mobilgeräts während der Fahrt mit der Personentransportanlage angeboten, um eine Fahrzeit gewinnbringend nutzen zu können. Zum Aufladen ist es jedoch erforderlich, das Mobilgerät in die Nähe der Lademöglichkeit beziehungsweise in einer Ladezone zu platzieren. Da das Mobilgerät in der Hand gehalten wird, beziehungsweise die Hand nicht weit von dem in der Ladezone platzierten Mobilgerät entfernt werden wird, kann eine Handhaltung des Passagiers ohne Zwang durch Gebote oder Verbote beeinflusst werden.

Der Passagier wird zumindest eine Hand freiwillig im Bereich der Ladezone platzieren. Wenn die Ladezone im Bereich einer Möglichkeit zum Festhalten angeordnet ist, ist diese bei Bedarf schnell für den Passagier greifbar. Der Anreiz der Lademöglichkeit kann somit ausgenutzt werden, um die Handhaltung des Passagiers zu beeinflussen.

Insbesondere bei Fahrtreppen und Fahrsteigen ist es vorteilhaft, die Ladezone im Bereich von Handläufen anzuordnen. So wird durch die Lademöglichkeit ein Anreiz geschaffen, Aufmerksamkeit auf den Handlauf zu lenken, da es einen Vorteil bietet, das Mobilgerät und damit die das Mobilgerät haltende Hand nahe am Handlauf oder sogar auf dem Handlauf zu platzieren.

Nachfolgend werden mögliche Details von Ausführungsformen der hierin vorgeschlagenen Personentransportanlage beschrieben.

Eine kontinuierlich fördernde Personentransportanlage kann jederzeit über einen Einstiegsbereich betreten und über einen Ausstiegsbereich verlassen werden. Die Personentransportanlage kann benutzt werden, ohne eine Abfahrtszeit eines Transportmittels der Personentransportanlage abzuwarten. Die Personentransportanlage transportiert Personen beziehungsweise Passagiere mit einer Transportgeschwindigkeit der Personentransportanlage vom Einstiegsbereich zum Ausstiegsbereich. Wenn zu einem Zeitpunkt mehr Personen transportiert werden wollen, als die Personentransportanlage transportieren kann, bildet sich eine Warteschlange. Eine Fahrtreppe kann als Rolltreppe bezeichnet werden. Ein Fahrsteig kann als Laufband bezeichnet werden. Bei der Fahrtreppe und dem Fahrsteig können die Passagiere durch eine Eigenbewegung eine resultierende Bewegungsgeschwindigkeit beeinflussen.

Die Energieübertragung zwischen der Mobilgerätladevorrichtung und dem Mobilgerät kann über elektrisch leitende Kontaktstellen erfolgen, wobei an einer Oberfläche des Handlaufs und am Mobilgerät entsprechende Kontaktstellen vorhanden sein müssen. Die Energieübertragung erfolgt durch die Kontaktstellen sehr Benutzungssicher, da diese keine Drähte mit Steckverbindungen im herkömmlichen Sinne darstellen. Solche wären insbesondere beim Verlassen der Personentransporteinrichtung hinderlich.

Eine Ausführung einer Mobilgerätladevorrichtung ist dazu ausgebildet, Energiespeicher von mobilen Endgeräten beziehungsweise Mobilgeräten, wie Tablets oder Smartphones drahtlos aufzuladen. Unter drahtlosem Laden kann eine Energieübertragung hin zu dem Mobilgerät verstanden werden, welche ohne eine Drahtverbindung zwischen der Mobilgerätladevorrichtung und dem Mobilgerät auskommt. Insbesondere braucht das Mobilgerät nicht in direktem, drahtverbundenem Kontakt zu der Mobilgerätladevorrichtung stehen. Gegebenenfalls braucht auch kein mechanischer Kontakt zwischen dem Mobilgerät und der Mobilgerätladevorrichtung bestehen. Ohne mechanischen Kontakt erfolgt die Energieübertragung berührungslos und somit ebenfalls drahtlos.

Die Mobilgerätladevorrichtung kann in der Nähe eines Handlaufs der Personentransportanlage angeordnet sein. Beispielsweise kann die Mobilgerätladevorrichtung, wie weiter unten detailliert angegeben, an dem Handlauf oder einer diesen Handlauf führenden Führung angeordnet sein. Alternativ kann eine Ladezone parallel zu dem Handlauf angeordnet sein.

Eine Transmittereinrichtung der Mobilgerätladevorrichtung kann in zumindest eine Handlaufbaugruppe der Personentransportanlage integriert sein. Die Handlaufbaugruppe kann eine statische Handlaufführung und einen um die Handlaufführung umlaufend angeordneten mobilen Handlauf aufweisen. Die Transmittereinrichtung ist dazu ausgebildet, eine Ladezone zum drahtlosen Übertragen von Energie zu dem Mobilgerät in einem Umfeld des Handlaufs bereitzustellen.

Durch eine Ladezone im Umfeld des Handlaufs werden Passagiere dazu animiert, ihr Mobilgerät in die Nähe des Handlaufs zu halten oder es auf den Handlauf zu legen. Damit ist die haltende Hand nahe am Handlauf, falls der Passagier das Gleichgewicht verlieren sollte oder geschubst werden sollte. Eine Ladezone ist ein Bereich, in dem das drahtlose Laden möglich ist. In der Ladezone kann in Abhängigkeit von der Anwesenheit eines Mobilgeräts ein Ladebereich aktiviert werden.

Die Transmittereinrichtung kann in die statische Handlaufführung integriert sein. Der mobile Handlauf kann umlaufend an der Handlaufführung geführt sein.

Die Transmittereinrichtung kann statisch, das heißt, stationär angeordnet sein. Dadurch können bewegliche Teile eingespart werden, die verschleißen könnten. Eine elektrische Kontaktierung der Transmittereinrichtung ist ebenfalls einfach. Die Transmittereinrichtung kann beispielsweise unterhalb des Handlaufs angeordnet sein. Durch die ortsfeste Anordnung unterhalb des mobilen Handlaufs werden nur entlang einer greifbaren Länge des Handlaufs Transmitter benötigt. Der Handlauf kann die Transmittereinrichtung vor Umwelteinflüssen schützen. Der Handlauf muss hierbei so ausgebildet sein, dass ihn die vom Transmitter ausgesendete Energie durchdringen kann. Beispielsweise müssten gegebenenfalls die üblicherweise metallenen Zugträger des Handlaufs wie Drahtlitzen, durch nichtleitende Zugträger aus Kunststoffasern ersetzt werden.

Zumindest ein Ladebereich für je ein Mobilgerät kann mit einer Transportgeschwindigkeit der Personentransportanlage entlang der Ladezone beweglich sein.

Die Transmittereinrichtung kann räumlich begrenzte Ladebereiche ausbilden. Da der Passagier dazu animiert werden soll, auf dem Fahrsteig oder der Fahrtreppe zu stehen und nicht zu gehen, kann der Ladebereich gleich schnell bewegt werden, wie die Paletten des Fahrsteigs beziehungsweise die Stufen der Fahrtreppe.

Alternativ kann ein Ladebereich auch einer tatsächlichen Bewegungsgeschwindigkeit des Mobilgeräts folgen. Dabei wird der Ladebereich jeweils am energetisch günstigsten Ort ausgebildet, um das Mobilgerät effizient laden zu können. Die Bewegung der Ladebereiche kann elektronisch geregelt werden.

Die Transmittereinrichtung kann in den Handlauf der Handlaufbaugruppe integriert sein.

Durch die Anordnung im Handlauf wird die Transmittereinrichtung mit der Transportgeschwindigkeit der Personentransportanlage bewegt. Ladebereiche können somit relativ zum Handlauf an fixen Positionen ausgebildet werden. So wird jeder Ladebereich mit der Transportgeschwindigkeit der Personentransportanlage in der Transportrichtung bewegt. Die Ladezone kann in Teilzonen aufgeteilt sein. Zwischen Teilzonen können Abschnitte des Handlaufs ohne Lademöglichkeit liegen. Da die Transmittereinrichtung zwangsweise mit der Transportgeschwindigkeit bewegt wird, ist wenig Regelungselektronik erforderlich.

Eine Energieversorgungseinrichtung zum Versorgen der im Handlauf angeordneten Transmittereinrichtung kann in die statische Handlaufführung integriert sein und zumindest ein berührendes Energieübertragungselement zu dem Handlauf aufweisen.

Eine Energieversorgungseinrichtung kann beispielsweise ein Netzgerät sein. Die Energieversorgungseinrichtung kann eine für die Transmittereinrichtung bestimmungsgemäße elektrische Spannung bereitstellen und/oder einen elektrischen Stromfluss auf einen für die Transmittereinrichtung bestimmungsgemäßen Maximalstrom begrenzen. Ein berührendes Energieübertragungselement kann beispielsweise eine Kontaktrolle oder ein Schleifkontakt sein. Das berührende Energieübertragungselement kann eine umlaufende Kontaktbahn des Handlaufs kontaktieren. Die Kontaktbahn und der Schleifkontakt beziehungsweise die Kontaktrolle können mehrpolig ausgeführt sein. Bei der mehrpoligen Kontaktrolle sind auf einem gemeinsamen Rollenkörper mehrere Kontaktringe nebeneinander elektrisch isoliert voneinander angeordnet. Die Isolation kann beispielsweise durch je eine Scheibe oder einen Zaun zwischen zwei Kontaktringen beziehungsweise Kontaktbahnen erfolgen. Eine Scheibe beziehungsweise ein Zaun kann zur Führung in einer Nut angeordnet sein. Auch Schleifkontakte können durch dazwischen angeordnete Zäune oder Scheiben elektrisch voneinander isoliert sein. Zäune können im Handlauf angeordnet sein, wenn die Nuten Teil des Energieübertragungselements sind. Scheiben können im Energieübertragungselement angeordnet sein, wenn die Nuten im Handlauf angeordnet sind.

Alternativ kann eine berührungslose Energieversorgungseinrichtung zum Versorgen der Transmittereinrichtung anteilig in die statische Handlaufführung und anteilig in den Handlauf integriert sein.

Eine berührungslose Energieversorgungseinrichtung kann zwei aufeinander abgestimmte Komponenten umfassen, von denen eine an der Handlaufführung angeordnet ist und die andere im Handlauf angeordnet ist. Beispielsweise kann die elektrische Energie induktiv oder elektromagnetisch übertragen werden. Über Sendespulen und Empfangsspulen kann die elektrische Energie durch Induktion beziehungsweise Magnetresonanz übertragen werden. Über eine Lichtquelle und fotoelektrische Wandler kann die elektrische Energie optisch übertragen werden. Beispielsweise kann eine Innenseite des Handlaufs Empfangsspulen oder Fotozellen aufweisen. Die Sendespulen oder die Lichtquelle können in einem Teilbereich der Handlaufführung angeordnet sein. Ebenso können mehrere Sendespulen beziehungsweise mehrere Lichtquellen über einen Umfang der Handlaufführung verteilt sein.

Die Transmittereinrichtung kann eine Mehrzahl von einzeln ansteuerbaren Transmittern aufweisen.

Die Transmitter können gleichartig sein. Durch einzeln ansteuerbare Transmitter kann Energie gespart werden, da nur die Transmitter aktiviert werden, die auch tatsächlich benötigt werden. Sind die Transmitter mit geringen Abständen zueinander angeordnet, kann das erzeugte Feld eines Ladebereichs elektronisch beeinflusst werden, indem benachbarte Transmitter gemeinsam das Feld erzeugen. Der Ladebereich kann durch Abschwächen beziehungsweise Verstärken von Einzelfeldern benachbarter Transmitter bewegt werden. Dann kann der Ladebereich unabhängig von der Transportgeschwindigkeit bewegt werden.

Der Handlauf kann Markierungen aufweisen, die Ladebereiche markieren. Durch die Markierungen weiß ein Passagier bereits unmittelbar beim Betreten der Personentransportanlage, wo ein Ladebereich zum Laden seines Mobilgeräts verfügbar ist. Die Markierungen können Symbole sein, die beispielsweise auf einer Sichtseite beziehungsweise Oberseite des Handlaufs angeordnet sind und auf die Lademöglichkeit hinweisen. Die Markierungen können beispielsweise auch durch eine auf dem Handlauf dargestellte Bedienungsanleitung ergänzt werden.

Ferner können Bereiche an der fixen Balustrade oder an Paletten oder Stufen Markierungen aufweisen, die die Ladezonen markieren. Diese Markierungen machen die Passagiere auf die Lademöglichkeit im Besonderen und auf die Ladebereiche im Speziellen aufmerksam. Das kann beispielsweise mittels einer an der Balustrade angebrachten LED- Lichterreihe, Bildschirmdisplays, Beleuchtungen oder einfach über Aufkleber (Sticker) markiert sein. Damit kann auch gezielt das "links stehen" und "rechts gehen" vermittelt werden und somit auch einen Beitrag zur Erhöhung der Sicherheit der Passagiere leisten.

Die Mobilgerätladevorrichtung kann eine Anzeigeeinrichtung zum Markieren von Ladebereichen und/oder Ladezonen aufweisen.

Die Ladebereiche und/oder Ladezonen können auch aktiv markiert werden. Die Anzeigeeinrichtung kann angesteuert werden, um Ladebereiche je nach Bedarf markieren zu können. Die Anzeigeeinrichtung weist vorzugsweise ansteuerbare Lichtquellen auf. Die Anzeigeeinrichtung kann die Ladebereiche beispielsweise durch grafisch dargestellte Symbole markieren. Die Lichtquellen können in den Handlauf integriert sein. Dann können die Lichtquellen beispielsweise in Form der Symbole angeordnet sein. Alternativ kann die Anzeigeeinrichtung an der statischen Handlaufführung angeordnet sein. Dann kann die Anzeigeeinrichtung eine Matrix aus ansteuerbaren Bildpunkten aufweisen. Die Lichtquellen können in einem Bildgeber zusammengefasst sein. Die dargestellten Symbole können synchron zu den Ladebereichen bewegt werden.

Die Anzeigeeinrichtung kann dazu ausgebildet sein, zumindest einen Bereitschaftszustand des Ladebereichs und/oder einen Kopplungszustand zu dem Mobilgerät anzuzeigen.

Die Anzeigeeinrichtung kann unterschiedliche Symbole darstellen. Unterschiedliche Symbole können unterschiedliche Bedeutungen aufweisen. Ein Wechsel von einem ersten Symbol zu einem zweiten Symbol kann beispielsweise eine erfolgreiche Kopplung eines Mobilgeräts mit der Mobilgerätladevorrichtung signalisieren. Die Darstellung eines weiteren Symbols kann eine misslungene Kopplung des Mobilgeräts mit der Mobilgerätladevorrichtung signalisieren.

Die Mobilgerätladevorrichtung kann in die stehseitige Handlaufbaugruppe der Personentransportanlage integriert sein. Mit anderen Worten kann die Mobilgerätladevorrichtung lediglich an einer der beiden Handlaufbaugruppen der Personentransportanlage vorgesehen sein, an deren Seite Passagiere der Personentransportanlage bestimmungsgemäß stehen sollen, wohingegen an der anderen Handlaufbaugruppe, an deren Seite Passagiere die Personentransportanlage bestimmungsgemäß entlang gehen sollen, keine Mobilgerätladevorrichtung vorgesehen werden braucht.

Die Mobilgerätladevorrichtung kann alternativ dazu auf beiden Seiten der Personentransportanlage integriert sein, das heißt, an beiden Handlaufbaugruppen vorgesehen sein, jedoch nur auf der Stehseite aktiviert sein.

Unter der Stehseite kann eine Seite der Personentransportanlage verstanden werden, auf der die Passagiere gemäß einer ortsüblichen Konvention stehen (beispielsweise in Europa rechts stehen, links gehen). Die andere Seite der Personentransportanlage kann als Gehseite bezeichnet werden. Durch eine Umkehr der Transportrichtung können Stehseite und Gehseite vertauscht, und die entsprechende Mobilgerätladevorrichtung aktiviert werden.

Durch die Lademöglichkeit lediglich auf der Stehseite kann die Gehseite einfacher von stehenden Passagieren freigehalten werden. Wenn die Personentransportanlage per ortsüblicher Konvention beidseitig stehend benutzt wird, können auf beiden Seiten Lademöglichkeiten angeboten bzw. aktiviert werden.

Die Mobilgerätladevorrichtung kann eine Datenschnittstelle zur Kommunikation mit dem Mobilgerät aufweisen. Über die Datenschnittstelle kann die Mobilgerätladevorrichtung drahtlos mit dem Mobilgerät kommunizieren. Die Datenschnittstelle kann ein weitverbreitetes Kommunikationsprotokoll, wie Bluetooth und/oder WLAN verwenden. Die Datenschnittstelle kann Kommunikation in beide Richtungen ermöglichen. Beispielsweise können von der Mobilgerätladevorrichtung Umgebungsinformationen bereitgestellt werden. So kann beispielsweise ein Geschoßplan, ein Stationsplan und/oder ein Umgebungsplan auf das Mobilgerät übertragen werden. Ebenso kann beispielsweise ein Zeitplan, wie kommende Abfahrtszeiten von Zügen, Straßenbahnen und/oder Bussen und/oder Anfangszeiten von Veranstaltungen in der Umgebung übertragen werden. Werbung von Werbepartnern kann bereitgestellt werden. Von dem Mobilgerät kann eine geplante Route übermittelt werden und ansprechend darauf Routenhinweise, beispielsweise über Sperrungen übermittelt werden.

Die Datenschnittstelle kann auch zum Austauschen von Ladeinformationen mit dem Mobilgerät ausgebildet sein. Über die Datenschnittstelle kann beispielsweise ein Typ des Mobilgeräts oder des darin aufgenommenen Energiespeichers abgerufen werden. Ansprechend auf den Typ kann eine maximale Ladeleistung der Mobilgerätladevorrichtung eingestellt werden. Ein Batteriezustand des Mobilgeräts kann übermittelt werden. Ansprechend darauf können Strom und/oder Spannung der von der Mobilgerätladevorrichtung bereitgestellten Ladeleistung beeinflusst werden.

Es wird daraufhingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Figur 1 zeigt eine Darstellung eines Fahrsteigs mit einer Mobilgerätladevorrichtung gemäß einem Ausführungsbeispiel;
Figur 2 zeigt eine Darstellung einer Fahrtreppe mit einer Mobilgerätladevorrichtung gemäß einem Ausführungsbeispiel;
Figur 3 zeigt eine Darstellung einer Personentransportanlage mit einer einseitigen Mobilgerätladevorrichtung gemäß einem Ausführungsbeispiel; und
Figur 4 zeigt eine Darstellung einer Personentransportanlage mit einer beidseitigen Mobilgerätladevorrichtung gemäß einem Ausführungsbeispiel.

Die Figuren sind lediglich schematisch und nicht maßstabsgetreu. Gleiche Bezugszeichen bezeichnen in den verschiedenen Figuren gleiche oder gleichwirkende Merkmale.

Fahrtreppen und Fahrsteige sind begehbare Personentransportanlagen, die für die Benutzer aufgrund der bewegten Trittflächen hinsichtlich eines Sturzes ein gewisses Gefahrenpotenzial aufweisen. Bei Fahrtreppen sind die Trittflächen an Stufen ausgebildet, wobei mehrere Stufen zu einem umlaufend bewegbaren Stufenband zusammengefasst sind. Bei Fahrsteigen sind die Trittflächen an Paletten ausgebildet, wobei mehrere Paletten zu einem umlaufend bewegbaren Palettenband zusammengefasst sind. Um der Gefahr eines Sturzes zu begegnen, schreibt beispielsweise die europäische Norm EN115 vor, dass beiderseits des Stufenbands oder Palettenbands Balustraden mit bewegten Handläufen vorzusehen sind. Die bewegten Handläufe laufen annähernd synchron mit dem Stufenband oder Palettenband um, sodass sich ein Benutzer sicher daran festhalten kann.

Es ist aus Sicherheitsgründen wichtig, sich am Handlauf festzuhalten, aber die große Verbreitung mobiler elektronischer Geräte wie Handys, Tablets und dergleichen mehr verleitet die Benutzer, während der Fahrt auf ihre Handys zu starren, statt sich am Handlauf festzuhalten. Sobald solche Benutzer beispielsweise durch sich vorbeidrängende Personen gestoßen werden und stürzen, sind ihre Hände zu weit vom Handlauf entfernt, sodass ihre Hände den sichernden Handlauf nicht mehr ergreifen können.

Der hier vorgestellte Ansatz bietet den Passagieren einen Anreiz, den Handlauf zu halten oder zumindest die Hand nahe am Handlauf zu halten, um bei Gefahr diesen sofort fassen zu können. Um dies zu erreichen, kann ein Ladegerät zur drahtlosen Übertragung elektrischer Energie im umlaufenden Handlauf oder in der Handlaufführung integriert werden. Die Übertragung der Energie kann elektromagnetisch oder optisch erfolgen. Zur Steuerung des Ladevorgangs kann das Ladegerät mit dem mobilen elektronischen Gerät kommunizieren.

Der Handlauf kann mehrere, an seinem Umfang angeordnete Ladestationen aufweisen, wobei diese intern miteinander elektrisch oder optisch verbunden sind. Die Energieübertragung auf die Leitungen des Handlaufs kann elektrisch über Kontaktrollen und über eine Kontaktspur erfolgen, die an der Innenseite des Handlaufprofils angeordnet ist. Eine optische Übertragung vom stationären Teil der Balustrade auf den bewegbaren Handlauf ist ebenfalls denkbar. Einfacher sind stationäre, sich über die Länge der Handlaufführung erstreckende Ladegeräte.

Der Handlauf kann markierte Felder aufweisen, die auf die Lademöglichkeit aufmerksam machen, sodass die Benutzer ihr mobiles Gerät während der Fahrt auf den Handlauf halten. Bei Gefahr sind sie dann in der Lage, blitzschnell den Handlauf zu greifen.

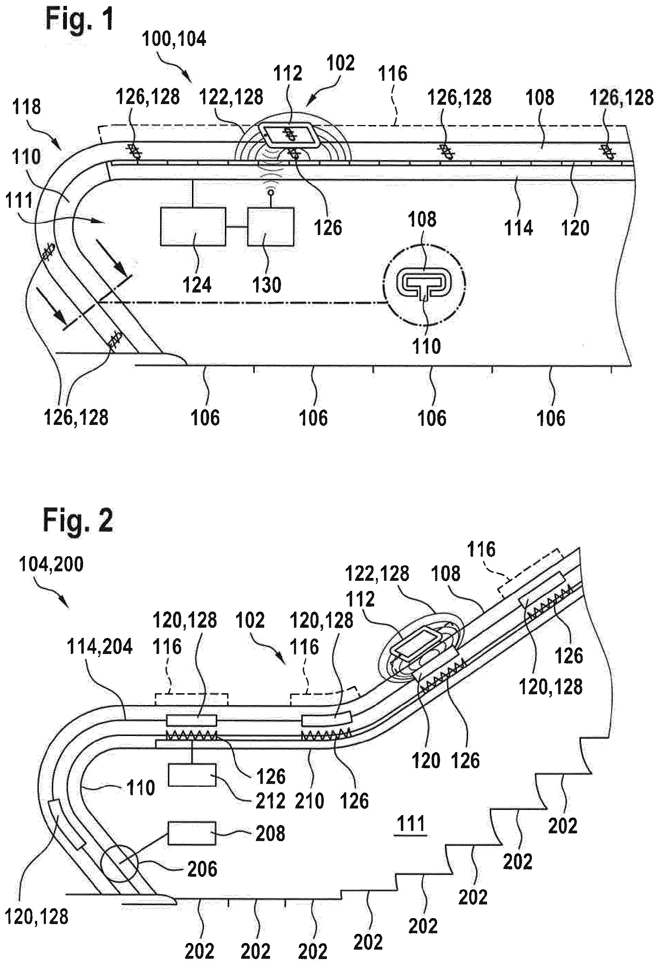

Figur 1 zeigt eine Darstellung eines Fahrsteigs 100 mit einer Mobilgerätladevorrichtung 102 gemäß einem Ausführungsbeispiel. Der Fahrsteig 100 ist eine kontinuierlich in eine Transportrichtung fördernde, begehbare Personentransportanlage 104 zum Transportieren von Passagieren in der Transportrichtung. Der Fahrsteig 100 weist mobile, durch eine Antriebseinrichtung des Fahrsteigs 100 angetriebene Paletten 106, die als Palettenband umlaufend angeordnet sind. Beidseits des Palettenbandes beziehungsweise der Paletten 106 weist der Fahrsteig 100 je einen mobilen, im Wesentlichen synchron zu den Paletten 106 angetriebenen Handlauf 108 auf, wobei aufgrund der gewählten zweidimensionalen Darstellung nur einer sichtbar ist. Die Paletten 106 bilden im sogenannten Vorlauf von einem Einstiegsbereich des Fahrsteigs 100 bis zu einem Ausstiegsbereich des Fahrsteiges 100 eine im Wesentlichen ebene Lauffläche aus, auf der die Passagiere stehen oder gehen können. Die Paletten 106 werden in der Transportrichtung bewegt. Nach dem Ausstiegsbereich des Fahrsteigs 100 werden die Paletten 106 umgelenkt und entgegen der Transportrichtung im sogenannten Rücklauf zurückgeführt. Die Paletten 106 können beispielsweise unterhalb der durch Passagiere betretbaren Lauffläche zurückgeführt werden. Am Ende des Rücklaufs werden die Paletten 106 wieder zum Vorlauf hin umgelenkt.

Die Handläufe 108 sind endlose Bänder beziehungsweise Riemen, die synchron zu den Paletten 106 um Handlaufführungen 110 umlaufen. Die Handläufe 108 sind beispielsweise segmentiert oder weisen ein Elastomermaterial auf. Beispielsweise weisen die Handläufe einen C-förmigen Querschnitt auf, während die Handlaufführungen einen T-förmigen Querschnitt aufweisen. Die Handlaufführungen 110 können in opaken Balustraden 111 des Fahrsteigs 100 integriert sein. Ebenso können die Handlaufführungen 110 an transparenten Balustraden 111 des Fahrsteigs 100 angeordnet sein.

Die Mobilgerätladevorrichtung 102 ist dazu ausgebildet, Mobilgeräte 112 der Passagiere drahtlos aufzuladen, wenn diese in einem Umfeld eines Handlaufs 108 angeordnet werden. Dazu ist eine Transmittereinrichtung 114 der Mobilgerätladevorrichtung 102 zum Bereitstellen einer Ladezone 116 in zumindest eine Handlaufbaugruppe 118 des Fahrsteigs 100 integriert. Die Handlaufbaugruppe 118 umfasst den Handlauf 108, die Handlaufführung 110, die opake oder transparente Balustrade 111 und einen nicht dargestellten Antrieb für den Handlauf 108. Im dargestellten Beispiel ist die Transmittereinrichtung 114 in die statische Handlaufführung 110 integriert. Dadurch kann die Transmittereinrichtung 114 einfach mit elektrischer Energie versorgt werden.

Die Transmittereinrichtung 114 ist dazu ausgebildet, elektrische Energie durch eine elektromagnetische Übertragung zu den Mobilgeräten 112 zu übertragen. Die Energie kann beispielsweise durch Licht, Induktion und/oder Magnetresonanz übertragen werden. Die elektrische Energie kann dabei auch über einen Spalt hinweg übertragen werden. Im vorliegenden Ausführungsbeispiel ist zwischen der Transmittereinrichtung 114 und dem Mobilgerät 112 der Handlauf 108 angeordnet.

In einem Ausführungsbeispiel weist die Transmittereinrichtung 114 einen einzigen Transmitter120 auf, der sich über die Länge des Fahrsteiges 100 erstreckt. Der Transmitter 120 ist dazu ausgebildet, ein Feld 122 aufzubauen, das sich über die Länge des Transmitters 120 erstreckt und über das die elektrische Energie auf das Mobilgerät 112 übertragen werden kann. Konkret bildet der Transmitter 120 beispielsweise ein statisches Magnetfeld aus, wobei die zur zum Laden des Energiespeichers des Mobilgerätes 112 erforderliche Ladespannung bei einer Bewegung des Mobilgerätes 112 im Magnetfeld erzeugt wird.

In einem Ausführungsbeispiel weist die Transmittereinrichtung 114 eine Vielzahl entlang einer Oberseite der Handlaufführung 110 angeordneter Transmitter 120 auf. Die Transmitter 120 sind dazu ausgebildet, je ein Feld 122, beispielsweise ein Wechselfeld, aufzubauen, über das die elektrische Energie auf das Mobilgerät 112 übertragen werden kann. Die Transmitter 120 sind einzeln ansteuerbar, um das resultierende Feld 122 synchron zu dem Handlauf 108 entlang der Handlaufführung 110 wandern zu lassen. Ein Transmittersteuergerät 124 steuert die einzelnen Transmitter 120 an und synchronisiert eine Bewegungsgeschwindigkeit des Felds 122 mit einer Transportgeschwindigkeit des Fahrsteigs 100 beziehungsweise des Handlaufs 108. Der Handlauf 108 weist Markierungen 126 auf, die Positionen von möglichen Ladebereichen 128 kennzeichnen. Die Markierungen 126 sind in regelmäßigen Abständen auf dem Handlauf 108 verteilt.

Ferner können Bereiche an der fixen Balustrade 111 oder an Paletten 106 oder Stufen 202 (siehe Figur 2) Markierungen aufweisen, die die Ladezonen 116 markieren. Diese Markierungen machen die Passagiere auf die Lademöglichkeit im Besonderen und auf die Ladebereiche 128 im Speziellen aufmerksam. Das kann beispielsweise mittels einer an der Balustrade angebrachten LED- Lichterreihe, Bildschirmdisplays, Beleuchtungen oder einfach über Aufkleber (Sticker) markiert sein. Der besseren Übersicht wegen wurde in den Figuren 1 und 2 auf eine Darstellung der Markierungen für die Ladezonen 116 verzichtet.

In einem Ausführungsbeispiel emittieren die Markierungen 126 Licht. Das Licht kann durch in die Markierungen 126 integrierte Lichtquellen bereitgestellt werden. Die Lichtquellen werden durch in den Handlauf 108 eingekoppelte elektrische Energie betrieben. Die elektrische Energie kann beispielsweise durch die Transmittereinrichtung 114 bereitgestellt und über Antennen beziehungsweise Spulen abgegriffen werden. Alternativ können Kontaktspuren am Handlauf 108 mit den Lichtquellen verbunden sein und über Schleifkontakte oder Kontaktrollen an der Handlaufführung 110 kontaktiert werden.

In einem Ausführungsbeispiel verläuft im Handlauf zumindest ein Lichtleiter, der eingekoppeltes Licht zu den Markierungen 126 verteilt. Die Lichtquelle kann dann auch in der Handlaufführung 110 angeordnet sein.

Alternativ dazu sind die Markierungen 126 nachleuchtend, also phosphoreszierend, fluoreszierend beziehungsweise lumineszierend ausgeführt. Die Markierungen 126 werden mit Licht aufgeladen und leuchten zumindest am Einstieg des Fahrsteigs 100 hell auf. Im Laufe der Fahrt kann die Leuchtkraft nachlassen. Die Markierungen können an einer durch die Passagiere nicht einsehbaren Stelle der Handlaufführung 110 wieder durch zumindest eine Lichtquelle aufgeladen werden. Alternativ oder ergänzend wandeln die Markierungen 126 einen UV-Anteil eines Umgebungslichts in sichtbares Licht um und wirken so heller als nur durch den sichtbaren Anteil des Umgebungslichts. Der UV-Anteil kann auch durch eine Beleuchtungseinrichtung der Personentransportanlage 104 emittiert werden. Das ultraviolette Licht kann auch desinfizierend auf den Handlauf 108 wirken.

In einem Ausführungsbeispiel ist die Mobilgerätladevorrichtung 102 dazu ausgebildet, mit dem Mobilgerät 112 zu kommunizieren. Dazu weist die Mobilgerätladevorrichtung eine Datenschnittstelle 130 zu dem Mobilgerät 112 auf. Über eine Sende- und Empfangsantenne kann die Datenschnittstelle 130 unter Verwendung eines bekannten Kommunikationsprotokolls, wie beispielsweise Bluetooth oder WLAN, mit dem Mobilgerät 112 kommunizieren.

In einem Ausführungsbeispiel ist die Datenschnittstelle 130 mit dem Transmittersteuergerät 124 verbunden. Über die Datenschnittstelle 130 wird eine Ladeinformation mit dem Mobilgerät 112 ausgetauscht. Die Ladeinformation bildet beispielsweise einen Ladezustand eines Akkus des Mobilgeräts 112 ab. Die Ladeinformation kann auch Lademodalitäten, wie eine maximale Ladeleistung festlegen. Auch die Aktivierung und Deaktivierung der Energieübertragung kann durch eine Identifizierungsabfrage über die Datenschnittstelle 130 erfolgen. Dadurch kann sichergestellt werden, dass nur Akkus von Mobilgeräten 112 aufgeladen werden können und nicht andere Geräte mit Energie versorgt werden, wie beispielsweise kurzgeschlossene Wicklungen, welche Vandalen auf den Handlauf 108 legen könnten.

Alternativ oder ergänzend können über die Datenschnittstelle 130 auch weitere Informationen zu dem Mobilgerät 112 übertragen werden. Beispielsweise können ein Umgebungsplan, Ankunft- und Abfahrtszeiten von öffentlichen Verkehrsmitteln in der Umgebung, Nachrichten, Wetterinformationen und/oder Informationen von Kooperationspartnern auf das Mobilgerät 112 übertragen werden. So kann eine Fahrzeit auf dem Fahrsteig 100 zum Informieren des Passagiers genutzt werden. Kurz vor dem Ende der Fahrt kann eine Warnung vor einer Kammplatte des Fahrsteiges 100, unter der die Paletten 106 im Ausstiegsbereich verschwinden, auf das Mobilgerät 112 übertragen werden.

Figur 2 zeigt eine Darstellung einer Fahrtreppe 200 mit einer Mobilgerätladevorrichtung 102 gemäß einem weiteren Ausführungsbeispiel. Die Fahrtreppe 200 ist eine kontinuierlich in eine Transportrichtung fördernde, begehbare Personentransportanlage 104 zum Transportieren von Passagieren. Die Fahrtreppe 200 weist bewegliche, angetriebene Stufen 202 und wie der Fahrsteig in Figur 1 beiderseits je eine Balustrade 111 mit einem beweglichen, im Wesentlichen synchron zu den Stufen 202 angetriebenen Handlauf 108 auf. Die Stufen 202 werden ähnlich wie bei dem Fahrsteig in Figur 1 vor dem Einstiegsbereich zu einer ebenen Lauffläche zusammengesetzt, in einem Schrägfahrbereich vertikal zueinander gestuft angeordnet, und vor dem Ausstiegsbereich wieder zu der ebenen Lauffläche zusammengefahren. Nach dem Ausstiegsbereich werden die Stufen umgelenkt und beispielsweise im Rücklauf unterhalb des Vorlaufs zum Einstiegsbereich zurückgeführt.

Die Mobilgerätladevorrichtung 102 entspricht im Wesentlichen der Mobilgerätladevorrichtung in Figur 1. Im Unterschied dazu sind aber die Transmitter 120 der Transmittereinrichtung 114 hier im Handlauf 108 angeordnet und werden mit dem Handlauf 108 in der Transportrichtung bewegt. Jeder zweiten Stufe 202 ist dabei ein Transmitter 120 zugeordnet. Die einzelnen Transmitter 120 sind in festen Abständen zueinander angeordnet. Die Ladezone 116 ist nicht durchgehend vorhanden, sondern in viele einzelne Ladebereiche 128 aufgeteilt. Ein Transmitter 120 ist dabei je einem Ladebereich 128 zugeordnet. Die Transmitter 120 sind elektrisch leitend miteinander verbunden. Kontaktbahnen 204 verlaufen entlang einer Innenseite des Handlaufs 108. Über ein Energieübertragungselement 206 wird elektrische Energie von einer statischen Energieversorgungseinrichtung 208 auf die Kontaktbahnen 204 übertragen. Hier ist das Energieübertragungselement 206 als mehrere einzelne Kontaktrollen oder eine mehrpolige Kontaktrolle ausgeführt.

Die Energieversorgungseinrichtung 208 kann die elektrische Energie auch drahtlos zu den Transmittern 120 übertragen. Die elektrische Energie kann induktiv oder elektromagnetisch übertragen werden. Beispielsweise kann die elektrische Energie über zumindest eine Sendespule und zumindest eine Empfangsspule übertragen werden. Die elektrische Energie kann auch optisch durch zumindest eine Lichtquelle und ein fotoelektrisches Element übertragen werden.

In einem Ausführungsbeispiel ist der Handlauf 108 zumindest teilweise transparent. Unter dem Handlauf 108 ist eine Anzeigeeinrichtung 210 fest mit der Handlaufführung 110 verbunden. Die Anzeigeeinrichtung 210 kann eine einfache Lichtquelle wie beispielsweise ein LED-Band beinhalten und die Markierungen 126 können als transparente Elemente im ansonsten opaken Handlauf eingearbeitet sein. Alternativ kann der Handlauf weitgehend transpatent sein. Die Markierung 126 der einzelnen Ladebereiche 128 erfolgt durch die Anzeigeeinrichtung 210. Die Anzeigeeinrichtung 210 weist dazu eine Matrix aus einzeln oder gruppenweise steuerbaren Lichtquellen auf. Die Lichtquellen werden von einem Anzeigesteuergerät 212 angesteuert. Auf der Anzeigeeinrichtung 210 können Symbole und/oder Markierungsbereiche synchron zur Bewegung des Handlaufs 108 angezeigt werden.

In einem Ausführungsbeispiel wird ein Status des jeweiligen Ladebereichs 128 durch die Markierungen 126 auf der Anzeigeeinrichtung 210 signalisiert. Beispielsweise kann eine Farbe und/oder eine Form des Symbols und/oder Markierungsbereichs entsprechend dem Status angezeigt werden. So kann zum Beispiel die Markierung 126 eines Ladebereichs 128, wenn ein Feld 122 zum Laden eines Mobilgeräts 112 emittiert wird, von einer ersten Farbe auf eine zweite Farbe wechseln und/oder die Helligkeit ändern.

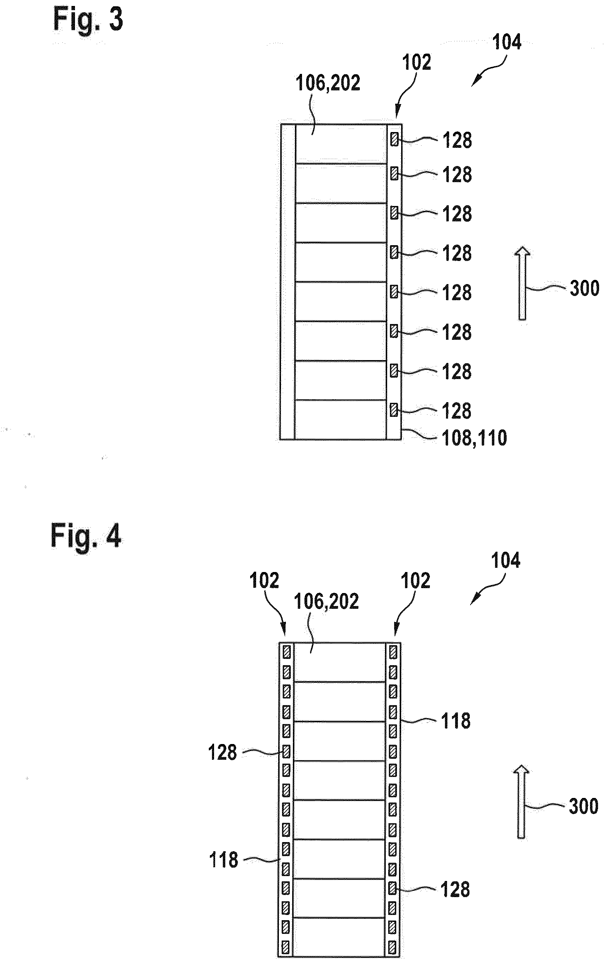

Figur 3 zeigt eine Darstellung einer Personentransportanlage 104 mit einer einseitigen Mobilgerätladevorrichtung 102 gemäß einem Ausführungsbeispiel. Die Personentransportanlage 104 kann eine Fahrtreppe wie in Figur 2 oder ein Fahrsteig wie in Figur 1 sein. Die Transmitter der Mobilgerätladevorrichtung 102 können wie in Figur 1 in die Handlaufführung 110 oder wie in Figur 2 in den Handlauf 108 integriert sein.

Im dargestellten Beispiel ist die Mobilgerätladevorrichtung 102 in diejenige Seite der Personentransportanlage 104 integriert, auf der die Passagiere üblicherweise stehend befördert werden. Diese Seite kann als Stehseite bezeichnet werden. Die Seite der Personentransportanlage 104, auf der die Passagiere an den stehenden Passagieren vorbeigehen, kann als Gehseite bezeichnet werden. Auf der Gehseite ist in dem hier dargestellten Ausführungsbeispiel keine Mobilgerätladevorrichtung 102 vorhanden.

Im vorliegenden Ausführungsbeispiel ist auf Höhe jeder Stufe 202 beziehungsweise Palette 106 je ein Ladebereich 128 angeordnet. Die Ladebereiche 128 sind dabei in Richtung der der Transportrichtung 300 versetzt zu den Paletten 106 beziehungsweise Stufen 202 angeordnet, damit die ideale Handhaltung zum raschen Greifen des Handlaufs 108 und stabilisieren des strauchelnden Passagiers vorgegeben ist.

Figur 4 zeigt eine Darstellung einer Personentransportanlage 104 mit einer beidseitigen Mobilgerätladevorrichtung 102 gemäß einem Ausführungsbeispiel. Die Personentransportanlage 104 entspricht im Wesentlichen der Personentransportanlage 104 in Figur 3. Zusätzlich sind hier in beide Handlaufbaugruppen 118 Mobilgerätladevorrichtungen 102 integriert. Die Mobilgerätladevorrichtungen 102 können fahrtrichtungsabhängig aktiviert werden. Hier sind pro Stufe 202 oder Palette 106 vier Ladebereiche 128 erreichbar vorhanden, um verschiedene Vorlieben der Passagiere befriedigen zu können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Personentransportanlage (104), die als Fahrtreppe (200) oder Fahrsteig (100) ausgebildet ist, **dadurch gekennzeichnet, dass** die Personentransportanlage (104) eine Mobilgerätladevorrichtung (102) aufweist, wobei während eines Personentransports die Mobilgerätladevorrichtung (102) zum Laden eines Energiespeichers eines Mobilgerätes (112) nutzbar ist.

2. Personentransportanlage (104) nach Anspruch 1, wobei eine Transmittereinrichtung (114) der Mobilgerätladevorrichtung (102) in zumindest eine Handlaufbaugruppe (118) der Personentransportanlage (104) integriert ist, wobei die Handlaufbaugruppe (118) eine statische Handlaufführung (110) und einen um die Handlaufführung (110) umlaufend angeordneten mobilen Handlauf (108) aufweist, wobei die Transmittereinrichtung (114) dazu ausgebildet ist, eine Ladezone (116) zum drahtlosen Übertragen von Energie zu dem Mobilgerät (112) in einem Umfeld des Handlaufs (108) bereitzustellen.

3. Personentransportanlage (104) nach Anspruch 2, wobei die Transmittereinrichtung (114) in die statische Handlaufführung (110) integriert ist, an der der mobile Handlauf (108) umlaufend geführt ist.

4. Personentransportanlage (104) nach Anspruch 3, wobei zumindest ein Ladebereich (128) für je ein Mobilgerät (112) mit einer Transportgeschwindigkeit der Personentransportanlage (104) entlang der Ladezone (116) beweglich ist.

5. Personentransportanlage (104) nach Anspruch 2, wobei die Transmittereinrichtung (114) in den Handlauf (108) der Handlaufbaugruppe (118) integriert ist.

6. Personentransportanlage (104) nach Anspruch 5, wobei eine Energieversorgungseinrichtung (208) zum Versorgen der Transmittereinrichtung (114) in die statische Handlaufführung (110) integriert ist und zumindest ein berührendes Energieübertragungselement (206) zu dem Handlauf (108) aufweist.

7. Personentransportanlage (104) nach Anspruch 5, wobei eine berührungslose Energieversorgungseinrichtung (208) zum Versorgen der Transmittereinrichtung (114) anteilig in die statische Handlaufführung (110) und anteilig in den Handlauf (108) integriert ist.

8. Personentransportanlage (104) nach einem der Ansprüche 2 bis 7, wobei die Transmittereinrichtung (114) eine Mehrzahl von einzeln ansteuerbaren Transmittern (120) aufweist.

9. Personentransportanlage (104) nach einem der Ansprüche 2 bis 8, wobei der Handlauf (108) Markierungen (126) aufweist, die Ladebereiche (128) markieren.

10. Personentransportanlage (104) nach einem der Ansprüche 2 bis 9, wobei Bereiche an der Balustrade (111) oder an Paletten (106) oder Stufen (202) Markierungen aufweisen, die Ladezonen (116) markieren.

11. Personentransportanlage (104) nach einem der vorangehenden Ansprüche, wobei die Mobilgerätladevorrichtung (102) eine Anzeigeeinrichtung (210) zum Markieren von Ladebereichen (128) und/oder Ladezonen aufweist.

12. Personentransportanlage (104) nach Anspruch 11, wobei die Anzeigeeinrichtung (210) dazu ausgebildet ist, zumindest einen Bereitschaftszustand des Ladebereichs (128) und/oder einen Kopplungszustand zu dem Mobilgerät (112) anzuzeigen.

13. Personentransportanlage (104) nach einem der Ansprüche 2 bis 12, wobei die Mobilgerätladevorrichtung (210) in die stehseitige Handlaufbaugruppe (118) der Personentransportanlage (104) integriert ist.

14. Personentransportanlage (104) nach einem der vorangehenden Ansprüche, wobei die Mobilgerätladevorrichtung (210) eine Datenschnittstelle (130) zur Kommunikation mit dem Mobilgerät (112) aufweist.

15. Personentransportanlage (104) nach Anspruch 14, wobei die Datenschnittstelle (130) zum Austauschen von Ladeinformationen mit dem Mobilgerät (112) ausgebildet ist.

## Claims

1. Passenger transport system (104) designed as an escalator (200) or moving walkway (100), **characterized in that** the passenger transport system (104) has a mobile device charging device (102), wherein, during a passenger transport, the mobile device charging device (102) can be used for charging an energy storage of a mobile device (112).

2. Passenger transport system (104) according to claim 1, wherein a transmitter device (114) of the mobile device charging device (102) is integrated into at least one handrail assembly (118) of the passenger transport system (104), the handrail assembly (118) comprising a static handrail guide (110) and a mobile handrail (108) rotatably arranged around the handrail guide (110), the transmitter device (114) being adapted to provide a charging zone (116) for wirelessly transmitting energy to the mobile device (112) in the vicinity of the handrail (108).

3. Passenger transport system (104) according to claim 2, wherein the transmitter device (114) is integrated into the static handrail guide (110), on which the mobile handrail (108) is rotatably arranged guided.

4. Passenger transport system (104) according to claim 3, wherein at least one charging area (128) for each mobile device (112) can be moved along the charging zone (116) at a transport speed of the passenger transport system (104).

5. Passenger transport system (104) according to claim 2, wherein the transmitter device (114) is integrated into the handrail (108) of the handrail assembly (118).

6. Passenger transport system (104) according to claim 5, wherein a power supply device (208) for supplying the transmitter device (114) is integrated into the static handrail guide (110) and has at least one power transmission element (206) contacting the handrail (108).

7. Passenger transport system (104) according to claim 5, wherein a non-contact power supply device (208) for powering the transmitter device (114) is partially integrated into the static handrail guide (110) and partially into the handrail (108).

8. Passenger transport system (104) according to any one of claims 2 to 7, wherein the transmitter device (114) comprises a plurality of individually controllable transmitters (120).

9. Passenger transport system (104) according to any one of claims 2 to 8, wherein the handrail (108) has markings (126) that identify the charging areas (128).

10. Passenger transport system (104) according to any one of claims 2 to 9, wherein areas on the balustrade (111) or on pallets (106) or steps (202) have markings identifying the charging zones (116).

11. Passenger transport system (104) according to any one of the preceding claims, wherein the mobile device charging device (102) has a display device (210) for marking charging areas (128) and/or charging zones.

12. Passenger transport system (104) according to claim 11, wherein the display device (210) is configured to display at least one standby status of the charging area (128) and/or a pairing status to the mobile device (112).

13. Passenger transport system (104) according to any one of claims 2 to 12, wherein the mobile device charging device (210) is integrated into the handrail assembly (118) of the standing side of the passenger transport system (104).

14. Passenger transport system (104) according to any one of the preceding claims, wherein the mobile device charging device (210) comprises a data interface (130) for communicating with the mobile device (112).

15. Passenger transport system (104) of claim 14, wherein the data interface (130) is configured to exchange charging information with the mobile device (112).

## Revendications

1. Installation de transport de personnes (104) réalisée sous la forme d'un escalier roulant (200) ou d'un trottoir roulant (100), **caractérisée en ce que** l'installation de transport de personnes (104) comporte un dispositif de recharge d'appareils mobiles (102), le dispositif de recharge d'appareils mobiles (102) pouvant être utilisé pour charger un accumulateur d'énergie d'un appareil mobile (112) pendant le transport de personnes.

2. Installation de transport de personnes (104) selon la revendication 1, dans laquelle un moyen d'émission (114) du dispositif de recharge d'appareils mobiles (102) est intégré dans au moins un ensemble de main courante (118) de l'installation de transport de personnes (104), l'ensemble de main courante (118) comprenant un guide de main courante statique (110) et une main courante mobile (108) disposée de manière circonférentielle autour du guide de main courante (110), le moyen d'émission (114) étant conçu pour fournir une zone de recharge (116) destinée à transmettre sans fil de l'énergie à l'appareil mobile (112) dans un environnement de la main courante (108).

3. Installation de transport de personnes (104) selon la revendication 2, dans laquelle le moyen d'émission (114) est intégré dans le guide de main courante statique (110) au niveau duquel la main courante mobile (108) est guidée de manière circonférentielle.

4. Installation de transport de personnes (104) selon la revendication 3, dans laquelle au moins une région de recharge (128) pour chaque appareil mobile (112) est mobile le long de la zone de recharge (116) à une vitesse de transport de l'installation de transport de personnes (104).

5. Installation de transport de personnes (104) selon la revendication 2, dans laquelle le moyen d'émission (114) est intégré dans la main courante (108) de l'ensemble de main courante (118).

6. Installation de transport de personnes (104) selon la revendication 5, dans laquelle un moyen d'alimentation en énergie (208) destiné à alimenter le moyen d'émission (114) est intégré dans le guide de main courante statique (110) et comprend au moins un élément de transmission d'énergie (206) en contact avec la main courante (108).

7. Installation de transport de personnes (104) selon la revendication 5, dans laquelle un moyen d'alimentation en énergie (208) sans contact destiné à alimenter le moyen d'émission (114) est intégré proportionnellement dans le guide de main courante statique (110) et proportionnellement dans la main courante (108).

8. Installation de transport de personnes (104) selon l'une des revendications 2 à 7, dans laquelle le moyen d'émission (114) comprend une pluralité d'émetteurs (120) pouvant être commandés de manière individuelle.

9. Installation de transport de personnes (104) selon l'une des revendications 2 à 8, dans laquelle la main courante (108) comporte des marquages (126) marquant des régions de recharge (128).

10. Installation de transport de personnes (104) selon l'une des revendications 2 à 9, dans laquelle des zones au niveau de la balustrade (111) ou des palettes (106) ou des marches (202) présentent des marquages marquant des zones de recharge (116).

11. Installation de transport de personnes (104) selon l'une des revendications précédentes, dans laquelle le dispositif de recharge d'appareils mobiles (102) comprend un moyen d'affichage (210) permettant de marquer les régions de recharge (128) et/ou les zones de recharge.

12. Installation de transport de personnes (104) selon la revendication 11, dans laquelle le moyen d'affichage (210) est conçu pour afficher un état de veille de la région de recharge (128) et/ou un état de couplage à l'appareil mobile (112).

13. Installation de transport de personnes (104) selon l'une des revendications 2 à 12, dans laquelle le dispositif de recharge d'appareils mobiles (210) est intégré dans l'ensemble de main courante (118) permanent de l'installation de transport de personnes (104).

14. Installation de transport de personnes (104) selon l'une des revendications précédentes, dans laquelle le dispositif de recharge d'appareils mobiles (210) comprend une interface de données (130) destinée à communiquer avec l'appareil mobile (112).

15. Installation de transport de personnes (104) selon la revendication 14, dans laquelle l'interface de données (130) est conçue pour échanger des informations de recharge avec l'appareil mobile (112).
